# EUROPÄISCHE PATENTSCHRIFT

(11) **EP 3 849 717 B1**
(45) Veröffentlichungstag und Bekanntmachung des Hinweises auf die Patenterteilung: **24.04.2024**
(21) Anmeldenummer: 19769120.7
(22) Anmeldetag: 11.09.2019
(51) Int. Cl.: B08B 7/02, B60S 1/02, B60S 1/56, B60R 1/06, G02B 27/00

(54) **VORRICHTUNG ZUR BESEITIGUNG VON ABLAGERUNGEN UND/ODER NIEDERSCHLAG AUF EINEM SUBSTRAT**
DEVICE FOR REMOVING DEPOSITS AND/OR PRECIPITATE ON A SUBSTRATE
DISPOSITIF D'ÉLIMINATION DE DÉPÔTS ET/OU DE PRÉCIPITATIONS SUR UN SUBSTRAT

(30) Priorität: 14.09.2018 DE 102018122557
(43) Veröffentlichungstag der Anmeldung: 21.07.2021
(73) Patentinhaber: EchoVista GmbH, 63500 Seligenstadt (DE)
(72) Erfinder: WALTER, Steffen, 63110 Rodgau (DE); JOHANNESSEN, Ole Gustav, Southhampton SO19 4EA (GB); MATTHEWS, Oliver Simon, Southhampton SO40 2RB (GB); SHIN, Mincheol, Eastleigh SO53 4HF (GB)
(74) Vertreter: Boult Wade Tennant LLP
(86) Internationale Anmeldenummer: PCT/EP2019/074262
(87) Internationale Veröffentlichungsnummer: WO 2020/053298

(56) Entgegenhaltungen:
- WO-A1-2012/095643
- US-A1- 2011 205 630
- US-A1- 2012 243 093

## Beschreibung

Die Erfindung betrifft eine Vorrichtung zur Beseitigung von Ablagerungen und/oder Niederschlag auf einem Substrat gemäß dem Oberbegriff von Anspruch 1, also eine Reinigungsvorrichtung.

Als Substrat kann beispielsweise eine Scheibe, eine Verbundglasscheibe, eine Linse eines optischen Systems, eine Schutz- oder Sichtscheibe oder eine sonstige Oberfläche verstanden werden. Oberflächen werden regelmäßig mittels manueller oder automatischer Vorrichtungen gegebenenfalls unter Zusatz von Reinigungsmitteln gereinigt. Zu solchen Vorrichtungen zählen beispielsweise Scheibenwischer, Wischer, Reinigungstücher und dergleichen.

Da ein manueller Eingriff in den Reinigungsvorgang oftmals nicht möglich ist, beispielsweise bei nicht zu öffnenden Fenstern, Windschutzscheiben von fahrenden Kraftfahrzeugen oder schwer zugänglichen Sichtscheiben in Maschinen oder unzugänglichen Kamerasystemen, werden Vorrichtungen zum Reinigen von Substratoberflächen vorgesehen, die keines manuellen Eingriffs bedürfen. Zudem ist es regelmäßig aus ästhetischen oder technischen Gesichtspunkten wünschenswert, dass die zu reinigende Oberfläche so wenig wie möglich von der Reinigungsvorrichtung verdeckt wird.

Dies hat den Hintergrund, dass etwa bei Sichtscheiben ein größtmöglicher Sichtbereich wünschenswert ist, oder, dass die Reinigungsvorrichtung beispielsweise im Falle von Scheibenwischern einen technischen Nachteil bietet. Ein solcher Nachteil kann mitunter darin bestehen, dass sich der Strömungswiderstand von Kraftfahrzeugen durch die Vorrichtung erhöht. oder, dass sich Schmutz an der Reinigungsvorrichtung selbst anlagert. Auch bei Kamerasystemen, optischen Überwachungsvorrichtungen Rückspiegeln oder sonstigen optischen Systemen ist es wünschenswert, das Sichtfeld durch die Reinigungsvorrichtung möglichst wenig einzuschränken.

Zur Vermeidung dieser Nachteile ist in der WO 2012/095643 A1 eine Vorrichtung zum Entfernen von Regen oder Sprühregen von der Oberfläche eines Fensters vorgesehen. Die Vorrichtung umfasst das Fenster sowie ein oder mehrere piezoelektrische Wandler (Transducer), die an dem Fenster befestigt sind. Die Vorrichtung nach WO 2012/095643 A1 ist dazu ausgebildet, den Regen oder Sprühregen durch Verwendung von Ultraschallwellen, also mittels Ultraschall zu verdampfen, wobei die Ultraschallwellen durch den mindestens einen piezoelektrischen Wandler erzeugt werden. US 2012 0 243 093 A1 offenbart eine Vorrichtung gemäß dem Oberbegriff des Anspruchs 1 und zeigt eine Linsenabdeckung auf der ein Transducer befestigt ist.

Für die Übertragung der Schallenergie von dem Transducer in das Substrat muss der jeweilige Transducer an dem Substrat in exakt definierter Weise und zuverlässig befestigt sein. Dies kann beispielsweise durch eine stoffschlüssige Verbindung erfolgen. Durch die Befestigung wird einerseits sichergestellt, dass der Transducer auch während dessen Betriebs auf dem Substrat verbleibt und andererseits die Schallenergie in das Substrat übertragen wird. Dabei ist es regelmäßig der Fall, dass sich die Materialien von Transducer, der Verbindung und dem Substrat unterscheiden.

Der Erfindung liegt die Aufgabe zugrunde, eine Vorrichtung zur Beseitigung von Ablagerungen und/oder Niederschlag auf einem Substrat dahingehend zu verbessern, dass Verluste bei der Übertragung der Schallenergie zwischen dem Transducer und dem Substrat verringert werden. Hauptmerkmale der Erfindung sind im kennzeichnenden Teil von Anspruch 1 angegeben.

Ausgestaltungen sind Gegenstand der Ansprüche 2 bis 9. Die Erfindung betrifft weiterhin gemäß Anspruch 10 ein optisches System zur Umgebungsüberwachung mit einer optischen Überwachungsvorrichtung aufweisend die Vorrichtung zur Beseitigung von Ablagerungen und/oder Niederschlag auf einem Substrat.

Bei einer Vorrichtung zur Beseitigung von Ablagerungen und/oder Niederschlag auf einem Substrat aufweisend mindestens einen mit dem Substrat durch eine Verbindungsschicht verliersicher verbundenen Transducer, wobei die Verbindungsschicht zwischen dem Substrat und dem Transducer angeordnet ist, ist erfindungsgemäß vorgesehen, dass die Verbindungsschicht ein Verbindungsmaterial und ein Füllmaterial aufweist.

Als Substrat kann beispielsweise in einer Weiterbildung der Erfindung ein transparentes Material, eine Sichtscheibe, eine Linse ein Spiegel oder eine Schutzscheibe vorgesehen sein, wobei das Substrat ein oder mehrlagig sein kann. Als Transducer kann ein piezoelektrischer Wandler, insbesondere ein Bleizirkonattitanat-Wandler (PZT) vorgesehen sein, wobei der Transducer auf der dem Substrat zugewandten Seite Elektrodenanordnungen aufweisen kann, die in einer näheren Ausgestaltung kammartig oder reißverschlussartig ineinandergreifen (Inter-Digital Transducer).

Optional sind durch den jeweiligen Transducer bei einem entsprechenden Antrieb durch eine hier nicht näher beschriebene Treibereinrichtung und gegebenenfalls eine Steuer- und/oder Regeleinrichtung verschiedene Wellenmoden erzeugbar. So können durch den Transducer Oberflächenwellen und/oder Raumwellen erzeugbar sein. Raumwellen sind beispielsweise Longitudinalwellen oder Transversalwellen. Longitudinalwellen schwingen in deren Ausbreitungsrichtung. Transversalwellen schwingen quer zu deren Ausbreitungsrichtung. Oberflächenwellen entstehen beispielsweise durch Brechung von Raumwellen an Grenzschichten. Die Oberflächenwellen breiten sich senkrecht zu deren Schwingungsrichtung entlang einer Grenzfläche zwischen zwei akustisch unterschiedlichen Medien aus. Beispielsweise schwingen Love-Wellen an der Grenzfläche in horizontaler Richtung und breiten sich senkrecht zu der Schwingungsrichtung aus. Rayleigh-Wellen schwingen, bezogen auf die Grenzfläche in vertikaler Richtung und breiten sich senkrecht zu der Schwingungsrichtung entlang der Grenzfläche aus. Die Oberflächenwellen erfahren in das jeweilig jenseits der Grenzfläche liegende Material eine starke Dämpfung. Die durch den Transducer erzeugten Schallwellen sind bevorzugt Ultraschallwellen. Ultraschall ist der Frequenzbereich, der oberhalb des Hörfrequenzbereichs des Menschen liegt und beginnt bei etwa 16 kHz.

Die Verbindungsschicht ist in einer Weiterbildung der Erfindung eine Schicht, die den Transducer mit dem Substrat stoffschlüssig verbindet. Dies kann optional durch eine Klebeschicht vorgesehen sein. Optional sorgt das Verbindungsmaterial für die Adhäsion des Transducers auf dem Substrat und weist materialspezifische mechanische und akustische Verbindungsmaterialeigenschaften auf. Optional kann das Füllmaterial ebenfalls zur Adhäsion beitragen aber zudem auch einen Abstand zwischen dem Substrat und dem Transducer definieren. Das Füllmaterial weist ebenfalls materialspezifische mechanische und akustische Füllmaterialeigenschaften auf. In einer Weiterbildung der Erfindung ist vorgesehen, dass die Verbindungsschicht den Transducer das Substrat und/oder das Füllmaterial miteinander verbindet, insbesondere stoffschlüssig miteinander verbindet, wobei in einer näheren Ausgestaltung der Erfindung vorgesehen ist, dass die Verbindungsschicht im Wesentlichen gasfrei ist.

Durch das Vorsehen einer Verbindungsschicht aus einem Verbindungsmaterial und einem Füllmaterial ergibt sich der Vorteil, dass die Verbindungsschicht durch Auswahl ihrer Materialzusammensetzung sowohl hinsichtlich ihrer mechanischen Eigenschaften, d.h. beispielsweise Dichte, Härte oder Viskosität, als auch hinsichtlich ihrer akustischen Eigenschaften, wie beispielsweise Schallausbreitungsgeschwindigkeit, beeinflussbar ist. Auf diese Weise lassen sich akustische Impedanzunterschiede bzw. akustische Impedanzkontraste zwischen der jeweiligen Feldimpedanz eines Material des Transducers und eines Materials des Substrats einstellen. Dadurch kann in vorteilhafter Weise beeinflusst werden, ob und mit welchem Ausmaß eine Reflexion der Schallenergie an einer Grenzfläche zwischen dem Transducer und der Verbindungsschicht und zwischen der Verbindungsschicht und dem Substrat auftritt. Zudem ist ein weiterer Vorteil dadurch gegeben, dass der Transducer insbesondere durch die Auswahl des Füllmaterials, das der Verbindungsschicht eine mechanische Stabilität verleihen kann, präzise zu dem Substrat ausrichtbar ist. Eine präzise Ausrichtung des Transducers zu dem Substrat hat den Vorteil, dass die durch den Transducer erzeugten Schallwellen optimal in das Substrat eingekoppelt werden und sich dort in definierter Art und Weise ausbreiten.

Ferner ist gemäß der Erfindung vorgesehen, dass die akustischen und/oder die mechanischen Eigenschaften der Verbindungsschicht durch das Masseverhältnis zwischen dem Verbindungsmaterial und dem Füllmaterial eingestellt sind. Optional ist vorgesehen, dass das Massenverhältnis von dem Füllmaterial zu dem Verbindungsmaterial hinsichtlich der gewünschten akustischen und/oder mechanischen Eigenschaften der Vorrichtung optimiert ist.

Über die Einstellung des Masseverhältnisses lassen sich in vorteilhafter und einfacher Weise die akustischen und/oder die mechanischen Eigenschaften der Verbindungsschicht beeinflussen, da das Verbindungsmaterial und das Füllmaterial lediglich abgewogen und vermengt werden müssen. Die gewünschten akustischen und/oder mechanischen Eigenschaften lassen sich in Abhängigkeit des Masseverhältnisses beispielsweise experimentell oder numerisch bestimmen. Auf diese Weise sind entsprechend des gewünschten Einsatz-Frequenzbereichs des Transducers und des jeweiligen Mediums des Transducers und des Substrats die akustischen Impedanzkontraste zwischen dem Transducer und der Verbindungsschicht sowie zwischen der Verbindungsschicht und dem Substrat einstellbar.

Eine weitere Ausprägung der Erfindung zeichnet sich dadurch aus, dass das Verbindungsmaterial mindestens eine Materialkomponente aufweist, die durch Strahlenhärtung, insbesondere durch UV-Strahlen, oder thermisch aushärtet, wobei über den Aushärteprozess vorzugsweise die akustischen und/oder mechanischen Eigenschaften der Vorrichtung beeinflussbar sind. Optional ist die Erfindung dadurch ausgestaltet, dass das Verbindungsmaterial ein Zwei-Komponenten Material aufweist, das durch Strahlenhärtung oder thermisch härtet. Es kann vorgesehen sein, dass das Verbindungsmaterial ein Epoxidharz ist. Strahlaushärtung und/oder thermische Aushärtung gestaltet sich deshalb vorteilhaft, weil die Aushärtung auch indirekt erfolgen kann. Indirekt bedeutet in diesem Kontext, dass kein Kontakt zu einem anderen Aushärtemedium, wie beispielsweise Sauerstoff, vorhanden sein muss. Dies ist insbesondere dann von Vorteil, wenn der Transducer durch die Verbindungsschicht an einem transparenten Substrat angebracht wird. Dann ist die Verbindungsschicht, bzw. das Verbindungsmaterial in der Verbindungsschicht durch das Substrat hindurch, beispielsweise von der dem Transducer gegenüberliegenden Seite aus aushärtbar.

Eine weitere Ausgestaltung der Erfindung sieht vor, dass die Schallausbreitungsgeschwindigkeit in dem Füllmaterial unterschiedlich zu der Schallausbreitungsgeschwindigkeit in dem Verbindungsmaterial ist. In einer näheren Ausgestaltung ist vorgesehen, dass die Schallausbreitungsgeschwindigkeit in dem Füllmaterial höher ist als die Schallausbreitungsgeschwindigkeit in dem Verbindungsmaterial. Es kann auch vorgesehen sein, dass die Dichte des Füllmaterials unterschiedlich, bevorzugt höher ist, als die Dichte des Verbindungsmaterials. Zudem kann vorgesehen sein, dass die Härte des Füllmaterials unterschiedlich, bevorzugt höher ist, als die Härte des Verbindungsmaterials. Auf diese Weise lässt sich die Schallausbreitungsgeschwindigkeit in der Verbindungsschicht zur Steuerung der Impedanzkontraste zwischen Transducer und Verbindungsschicht sowie Verbindungsschicht und Substrat in vorteilhafter Weise einstellen. Die Dichte und die Härte sind weitere Materialeigenschaften, die in vorteilhafter Weise direkt oder indirekt die Schallausbreitungsgeschwindigkeit und die Impedanz des Verbindungsmaterial und des Füllmaterials und somit auch die Impedanz der Verbindungsschicht beeinflussen.

Gemäß einer Weiterbildung der Erfindung ist vorgesehen, dass die Schallausbreitung in der Verbindungsschicht anisotrop ist. Auf diese Weise wird vorteilhaft die Ausbreitung von Oberflächenwellen entlang der Grenzfläche zwischen Transducer und Substrat bei entsprechender mechanischer Anregung durch den Transducer begünstigt.

Eine weitere Ausgestaltung der Erfindung sieht vor, dass das Füllmaterial wenigstens teilweise aus einem Silikatglas, insbesondere einem Borosilikatglas besteht. Durch das Verwenden eines der obenstehenden Glase ergibt sich der Vorteil, dass die akustischen Eigenschaften der Verbindungsschicht über das Füllmaterial an die akustischen Eigenschaften des Substrats anpassbar sind. Dies ist insbesondere dann von Vorteil, wenn das Substrat selbst ein Glas ist.

Eine besonders bevorzugte Ausführungsform der Erfindung sieht vor, dass das Füllmaterial einen definierten Abstand zwischen dem Transducer und dem Substrat herstellt. Der durch das Füllmaterial definierte Abstand ist insbesondere in Hinblick auf die Kopplung des Transducers an das Substrat sowie für die Ausrichtung des Transducers relativ zu der Oberfläche des Substrats vorteilhaft.

Erfindungsgemäß ist weiterhin vorgesehen, dass mindestens ein Formkörper aus dem Füllmaterial eine akustische Brücke durch eine Kopplung mit dem Transducer und dem Substrat bildet. Gemäß einer Weiterbildung der Erfindung ist vorgesehen, dass der mindestens eine Formkörper ein Festkörper, vorzugsweise massiv ist. Ferner ist erfindungsgemäß vorgesehen, dass der mindestens eine Formkörper eine dem Abstand entsprechende Abmessung aufweist. Somit ist in mechanischer Hinsicht ein Abstand zwischen dem Transducer und dem Substrat durch das Füllmaterial in vorteilhafter Weise fest und eindeutig definiert. Der mindestens eine Formkörper kann eine das Füllmaterial aufweisende Matrix in dem Verbindungsmaterial ausbilden. Durch die akustische Koppelung des Transducers mit dem Substrat über die akustische Brücke des Füllmaterials, also den direkten Materialkontakt des Verbindungsmaterials mit dem Transducer und dem Substrat ergibt sich der weitere Vorteil, dass u.a. die akustischen Eigenschaften der Verbindungsschicht dadurch beeinflussbar sind.

Auf diese Weise lassen sich die Impedanzkontraste zwischen Transducer und Verbindungsschicht sowie zwischen der Verbindungsschicht und dem Substrat zusätzlich vorteilhaft beeinflussen.

Eine Weiterbildung der Erfindung sieht vor, dass der mindestens eine Formkörper kugelförmig oder stabförmig ist. Gemäß einer Weiterbildung der Erfindung ist vorgesehen, dass der Durchmesser des mindestens einen kugelförmigen oder stabförmigen Formkörpers einem Bruchteil einer Betriebsfrequenz des Transducers entspricht. Eine Weiterbildung sieht optional vor, dass der mindestens eine stabförmige Formkörper liegend oder stehend angeordnet ist. Durch die kugel- oder stabförmige Ausgestaltung des mindestens einen Formkörpers ergibt sich in vorteilhafter Weise, dass der oder die Formkörper gut in dem Verbindungsmaterial verteilbar sind und stets in einer definierten Lage in dem Verbindungsmaterial vorliegen, was einen positiven Einfluss auf die Übertragung der Schallwellen von dem Transducer zu dem Substrat hat.

In einer weiteren Ausgestaltung der Erfindung kann vorgesehen sein, dass das Verbindungsmaterial an einer Grenzfläche zwischen dem mindestens einen Formkörper und dem Transducer und an einer Grenzfläche zwischen dem mindestens einen Formkörper und dem Substrat angeordnet ist. Eine Weiterbildung der Erfindung sieht vor, dass die Verbindungsschicht zur Einkopplung von vom Transducer erzeugten Oberflächenwellen und/oder Raumwellen in das Substrat vorgesehen ist. Somit ist auf vorteilhafte Weise eine weitere Möglichkeit gegeben, die akustischen und mechanischen Eigenschaften der Verbindungsschicht zu beeinflussen.

Eine weitere Ausgestaltung der Erfindung sieht vor, dass die Vorrichtung weiterhin einen Generator zur Erzeugung eines Treibersignals in einem Frequenzbereich über 100 kHz zum Antrieb eines Transducers aufweist. Dadurch, dass ein Generator vorgesehen ist und das Treibersignal für den Transducer in einem Frequenzbereich über 100 kHz liegt, lassen sich Oberflächenverunreinigungen, wie zum Beispiel Niederschlag oder sonstige Ablagerungen besonders effizient mittels der in den Niederschlag oder die sonstigen Ablagerungen eingeschalteten Ultraschallwellen durch deren Vaporisierung und/oder Bewegung entfernen.

Die Erfindung betrifft außerdem ein Optisches System zur Umgebungsüberwachung mit einer optischen Überwachungsvorrichtung mit einer Linse und/oder einem Sichtfenster und der obenstehend beschriebenen Vorrichtung und deren Ausgestaltungen, wobei die Linse oder das Sichtfenster durch das Substrat gebildet ist. Der Einsatz der obenstehenden Vorrichtung gestaltet sich insbesondere für ein optisches System zur Umgebungsüberwachung vorteilhaft, weil durch den Einsatz des mindestens einem Transducers auf der Linse oder dem Sichtfenster sichergestellt ist, dass ein Sichtbereich bzw. Überwachungsbereich des optischen Systems weitestgehend unbeeinträchtigt bleibt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische, perspektivische Ansicht des Substrats mit einem daran angeordneten Transducer;
- Fig. 2: eine schematische, Schnittansicht des Substrats mit einem daran angeordneten Transducer nach einer ersten Ausführungsform;
- Fig. 3: eine schematische, Schnittansicht des Substrats mit einem daran angeordneten Transducer nach einer zweiten Ausführungsform und
- Fig. 4: eine schematische, Schnittansicht des Substrats mit einem daran angeordneten Transducer nach einer dritten Ausführungsform.

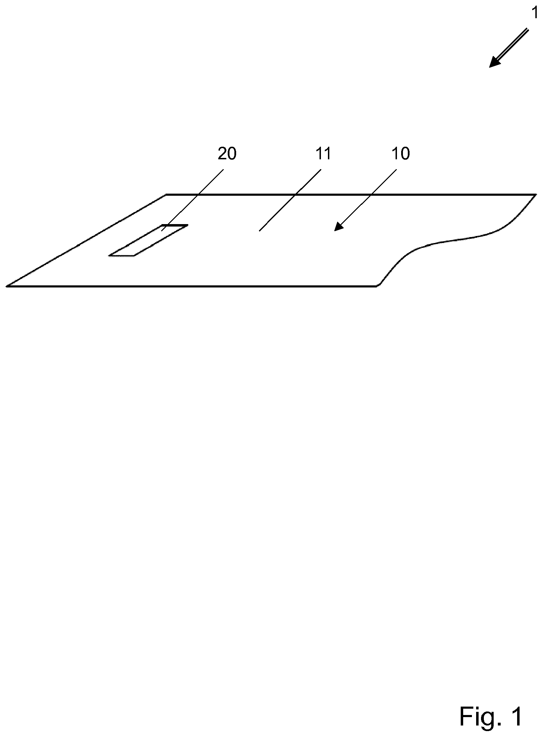

Fig. 1 zeigt eine schematische, perspektivische Ansicht der Vorrichtung 1 zur Beseitigung von Ablagerungen und/oder Niederschlag auf einem Substrat 10 mit einem an dem Substrat 10 angeordneten Transducer 20 nach einer ersten Ausführungsform, wobei der Transducer auf einer Oberfläche 11 des Substrats angeordnet ist.

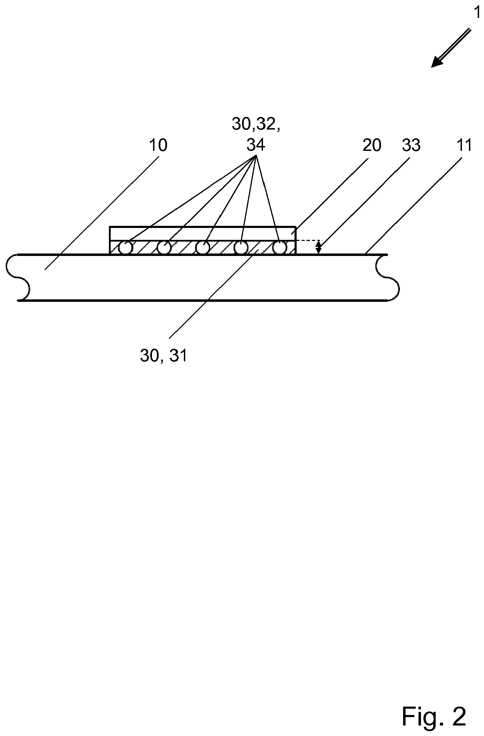

Fig. 2 zeigt eine schematische, Schnittansicht der Vorrichtung 1 zur Beseitigung von Ablagerungen und/oder Niederschlag auf einem Substrat 10 mit einem an dem Substrat 10 angeordneten Transducer 20 nach einer ersten Ausführungsform. Der Transducer ist auf einer Oberfläche 11 des Substrats 10 angeordnet. Zwischen dem Substrat 10 und dem Transducer 20 liegt eine Verbindungsschicht 30, die ein Verbindungsmaterial 31 und ein Füllmaterial 32 aufweist.

In der vorliegenden ersten Ausführungsform liegt das Füllmaterial 32 in Form von als Kugeln oder Zylindern ausgebildeten Formkörpern 34 in dem Verbindungsmaterial 31 ein. Die Formkörper 34 bilden eine Matrix für das Verbindungsmaterial 31, sodass die Verbindungsschicht 30 dementsprechend aus zwei Komponenten aufgebaut ist. Die Mächtigkeit der Verbindungsschicht 30 wird durch den durch die Formkörper 34 vorgegebenen Abstand 33 definiert. Die Formkörper 34 liegen sowohl unmittelbar an dem Transducer 20 als auch unmittelbar an dem Substrat 10 an und bilden eine akustische Brücke.

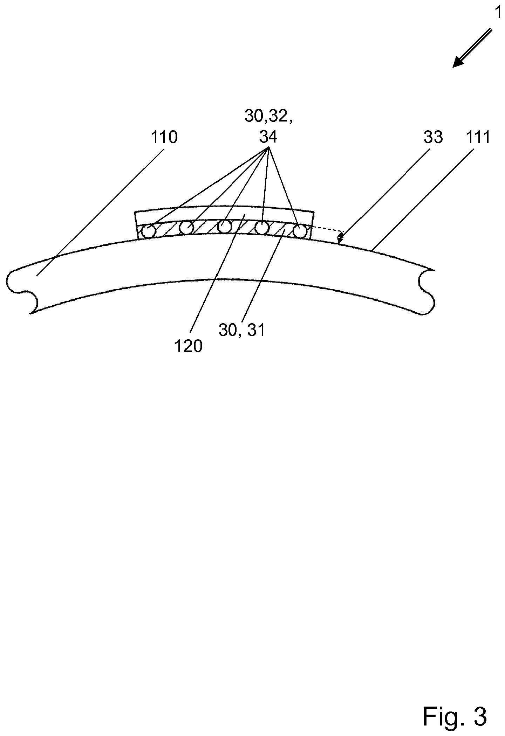

Fig. 3 zeigt eine schematische, Schnittansicht der Vorrichtung 1 zur Beseitigung von Ablagerungen und/oder Niederschlag auf einem Substrat 110 mit einem an dem Substrat 110 angeordneten Transducer 120 nach einer zweiten Ausführungsform.

Die dem Transducer 120 zugewandte Oberfläche 111 des Substrats 110 ist gekrümmt. Der Transducer 120 weist in der dem Substrat 110 zugewandten Oberfläche eine im Wesentlichen der Krümmung der Oberfläche 111 entsprechende Krümmung auf.

Auch in dieser Ausführungsform liegt das Füllmaterial 32 in Form von als Kugeln oder Zylindern ausgebildeten Formkörpern 34 in dem Verbindungsmaterial 31 ein, wobei die Formkörper 34 eine Matrix für das Verbindungsmaterial 31 ausbilden. Die Verbindungsschicht 30 ist demnach aus zwei Komponenten aufgebaut. Die Formkörper 34 liegen sowohl unmittelbar an dem Transducer 120 als auch unmittelbar an dem Substrat 110 an und bilden eine akustische Brücke. Die Mächtigkeit der Verbindungsschicht 30 wird durch den durch die Formkörper 34 vorgegebenen Abstand 33 definiert.

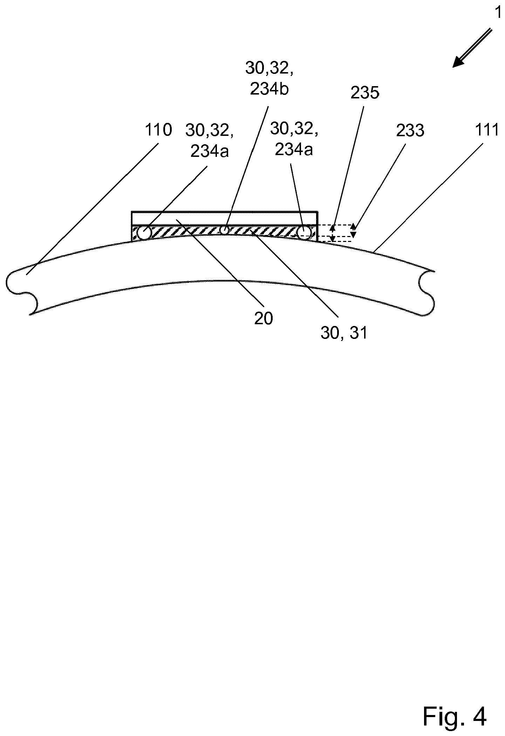

Fig. 4 zeigt eine schematische, Schnittansicht der Vorrichtung 1 zur Beseitigung von Ablagerungen und/oder Niederschlag auf einem Substrat 110 mit einem an dem Substrat 110 angeordneten Transducer 20 nach einer dritten Ausführungsform.

In dieser Ausführungsform ist die dem Transducer 20 zugewandte Oberfläche 111 des Substrats 110 gekrümmt, wobei die dem Substrat 110 zugewandten Oberfläche des Transducers 20 im Wesentlichen keine Krümmung aufweist. Demnach variiert der Abstand 233, 235 zwischen dem Transducer 20 und der Oberfläche 111 des Substrats 110.

Die Formkörper 234a, 234b aus dem Füllmaterial 32 weisen unterschiedliche Durchmesser auf, um den variierenden Abstand 233, 235 zwischen der Oberfläche 111 und dem Transducer 20 zu kompensieren. Die Formkörper 234a, 234b liegen hierbei sowohl an der Oberfläche 111 des Substrats 110, als auch an dem Transducer 20 an und bilden eine akustische Brücke aus.

Der Zwischenraum zwischen Transducer 20 und der Oberfläche 111 ist neben dem Füllmaterial 32 mit dem Verbindungsmaterial 31 aufgefüllt.

Die Erfindung ist nicht auf eine der vorbeschriebenen Ausführungsformen beschränkt, sondern in vielfältiger Weise abwandelbar. Es kann beispielsweise vorgesehen sein, dass das Füllmaterial 32 in dem Verbindungsmaterial 31 eingebettet ist und nicht aus diskreten Formkörpern 34 besteht, sondern vielmehr mit dem Verbindungsmaterial vermengt ist. Alternativ dazu kann vorgesehen sein, dass der mindestens eine Formkörper 34, 234a, 234b ein Strukturkörper ist, der eine vorzugsweise regelmäßige Struktur, insbesondere eine Netzstruktur oder eine Wabenstruktur, aufweist.

### Bezugszeichen liste

- 1: Vorrichtung
- 10, 110: Substrat
- 11, 111: Oberfläche
- 20, 120: Transducer
- 30: Verbindungsschicht
- 31: Verbindungsmaterial
- 32: Füllmaterial
- 33, 233: erster Abstand
- 34, 234a, 234b: Formkörper
- 35, 235: zweiter Abstand

## Patentansprüche

1. Vorrichtung (1) zur Beseitigung von Ablagerungen und/oder Niederschlag auf einem Substrat (10), aufweisend das Substrat und mindestens einen mit dem Substrat (10 110) durch eine Verbindungsschicht (30) verliersicher verbundenen Transducer (20, 120), wobei die Verbindungsschicht (30) zwischen dem Substrat (10, 110) und dem Transducer (20, 120) angeordnet ist, wobei die Verbindungsschicht (30) ein Verbindungsmaterial (31) und ein Füllmaterial (32) aufweist, wobei die akustischen und/oder die mechanischen Eigenschaften der Verbindungsschicht (30) durch das Masseverhältnis zwischen dem Verbindungsmaterial (31) und dem Füllmaterial (32) eingestellt sind, **dadurch gekennzeichnet, dass** mindestens ein Formkörper (34, 234a, 234b) aus dem Füllmaterial (32) sowohl direkt an dem Transducer (20, 120) und direkt an dem Substrat (10) anliegt und eine akustische Brücke ausbildet, wobei der zumindest eine Formkörper (34, 234a, 234b) eine einem Abstand zwischen dem Transducer (20, 120) und dem Substrat (10) entsprechende Abmessung aufweist.

2. Vorrichtung (1) nach Anspruch 1, **dadurch gekennzeichnet, dass** die Schallausbreitungsgeschwindigkeit in dem Füllmaterial (32) unterschiedlich zu der Schallausbreitungsgeschwindigkeit in dem Verbindungsmaterial (31) ist.

3. Vorrichtung (1) nach einem der vorhergehenden Ansprüche, **dadurch gekennzeichnet, dass** das Füllmaterial (32) wenigstens teilweise aus einem Silikatglas, insbesondere einem Borosilikatglas besteht.

4. Vorrichtung (1) nach einem der vorhergehenden Ansprüche, **dadurch gekennzeichnet, dass** das Füllmaterial (32) einen definierten Abstand (33, 233) zwischen dem Transducer (20, 120) und dem Substrat (10, 110) herstellt.

5. Vorrichtung (1) nach Anspruch 4, **dadurch gekennzeichnet, dass** mindestens ein Formkörper (34, 234a, 234b) aus dem Füllmaterial (32) eine akustische Brücke durch eine Kopplung mit dem Transducer (20, 120) und dem Substrat (10, 110) bildet.

6. Vorrichtung (1) nach Anspruch 5, **dadurch gekennzeichnet, dass** der mindestens eine Formkörper (34, 234a, 234b) kugelförmig oder stabförmig ist.

7. Vorrichtung (1) nach einem der Ansprüche 5 oder 6, **dadurch gekennzeichnet, dass** das Verbindungsmaterial (31) an einer Grenzfläche zwischen dem mindestens einen Formkörper (34, 234a, 234b) und dem Transducer (20, 120) und an einer Grenzfläche zwischen dem mindestens einen Formkörper (34, 234a, 234b) und dem Substrat (10, 110) angeordnet ist.

8. Vorrichtung (1) nach einem der vorhergehenden Ansprüche, **dadurch gekennzeichnet, dass** die Verbindungsschicht (30) zur Einkopplung von vom Transducer (20, 120) erzeugten Oberflächenwellen und/oder Raumwellen in das Substrat (10, 110) vorgesehen ist.

9. Vorrichtung (1) nach einem der vorhergehenden Ansprüche, **dadurch gekennzeichnet, dass** die Vorrichtung (1) weiterhin einen Generator zur Erzeugung eines Treibersignals in einem Frequenzbereich über 100 kHz zum Antrieb eines Transducers (20, 120) aufweist.

10. Optisches System zur Umgebungsüberwachung mit einer optischen Überwachungsvorrichtung mit einer Linse und/oder einem Sichtfenster und der Vorrichtung nach einem der vorhergehenden Ansprüche, wobei die Linse oder das Sichtfenster durch das Substrat gebildet ist.

## Claims

1. Device (1) for eliminating deposits and/or precipitation on a substrate (10), comprising the substrate and at least one transducer (20, 120) captively connected to the substrate (10, 110) by a connection layer (30), wherein the connection layer (30) is arranged between the substrate (10, 110) and the transducer (20, 120), wherein the connection layer (30) comprises a connection material (31) and a filling material (32), wherein the acoustic and/or mechanical properties of the connection layer (30) are set by a mass ratio between the connection material (31) and the filler material (23), **characterised in that** at least one shaped body (34, 234a, 234b) made from the filler material (32) bears both directly on the transducer (20, 120) and directly on the substrate (10) and forms an acoustic bridge, wherein the at least one shaped body (34, 234a, 234b) has a dimension corresponding to a distance between the transducer (20, 120) and the substrate (10).

2. Device (1) according to claim 1, **characterized in that** the sound propagation velocity in the filler material (32) is different from the sound propagation velocity in the connection material (31).

3. Device (1) according to any one of the preceding claims, **characterized in that** the filler material (32) consists at least partly of a silicate glass, in particular a borosilicate glass.

4. Device (1) according to any one of the preceding claims, **characterized in that** the filler material (32) establishes a defined distance (33, 233) between the transducer (20, 120) and the substrate (10, 110).

5. Device (1) according to claim 4, **characterized in that** at least one shaped body (34, 234a, 234b) made of the filler material (32) forms an acoustic bridge by coupling with the transducer (20, 120) and the substrate (10, 110).

6. Device (1) according to claim 5, **characterized in that** the at least one shaped body (34, 234a, 234b) is spherical or rod-shaped.

7. Device (1) according to any one of claims 5 or 6, **characterized in that** the connection material (31) is arranged at a boundary between the at least one shaped body (34, 234a, 234b) and the transducer (20, 120) and at a boundary between the at least one shaped body (34, 234a, 234b) and the substrate (10, 110).

8. Device (1) according to any one of the preceding claims, **characterized in that** the connection layer (30) is provided for coupling surface waves and/or space waves generated by the transducer (20, 120) into the substrate (10, 110).

9. Device (1) according to any one of the preceding claims, **characterized in that** the device (1) further comprises a generator for generating a driver signal in a frequency range above 100 kHz for driving a transducer (20, 120).

10. Optical system for monitoring the environment comprising an optical monitoring device with a lens and/or an observation window and the device according to any one of the preceding claims, wherein the lens or the observation window is formed by the substrate.

## Revendications

1. Dispositif (1) pour éliminer des dépôts et/ou un précipité d'un substrat (10), présentant le substrat et au moins un transducteur (20, 120) relié de manière imperdable au substrat (10, 110) par l'intermédiaire d'une couche de liaison (30), dans lequel la couche de liaison (30) est disposée entre le substrat (10, 110) et le transducteur (20, 120), dans lequel la couche de liaison (30) présente un matériau de liaison (31) et un matériau de remplissage (32), dans lequel les propriétés acoustiques et/ou mécaniques de la couche de liaison (30) sont définies par le rapport de masse entre le matériau de liaison (31) et le matériau de remplissage (32), **caractérisé en ce qu'**au moins un corps moulé (34, 234a, 234b) à partir du matériau de remplissage (32) s'appuie à la fois directement sur le transducteur (20, 120) et directement sur le substrat (10) et forme un pont acoustique, dans lequel le au moins un corps moulé (34, 234a, 234b) présente une mesure correspondant à une distance entre le transducteur (20, 120) et le substrat (10).

2. Dispositif (1) selon la revendication 1, **caractérisé en ce que** la vitesse de propagation du son dans le matériau de remplissage (32) est différent de la vitesse de propagation du son dans le matériau de liaison (31).

3. Dispositif (1) selon l'une quelconque des revendications précédentes, **caractérisé en ce que** le matériau de remplissage (32) se compose au moins partiellement d'un verre silicaté, en particulier d'un verre borosilicate.

4. Dispositif (1) selon l'une quelconque des revendications précédentes, **caractérisé en ce que** le matériau de remplissage (32) crée une distance (33, 233) définie entre le transducteur (20, 120) et le substrat (10, 110).

5. Dispositif (1) selon la revendication 4, **caractérisé en ce que** le au moins un corps moulé (34, 234a, 234b) forme à partir du matériau de remplissage (32) un pont acoustique par un couplage avec le transducteur (20, 120) et le substrat (10, 110).

6. Dispositif (1) selon la revendication 5, **caractérisé en ce que** le au moins un corps moulé (34, 234a, 234b) est de forme sphérique ou en forme de tige.

7. Dispositif (1) selon l'une quelconque des revendications 5 ou 6, **caractérisé en ce que** le matériau de liaison (31) est disposé sur une surface limite entre le au moins un corps moulé (34, 234a, 234b) et le transducteur (20, 120) et sur une surface limite entre le au moins un corps moulé (34, 234a, 234b) et le substrat (10, 110).

8. Dispositif (1) selon l'une quelconque des revendications précédentes, **caractérisé en ce que** la couche de liaison (30) est prévue pour le couplage d'ondes de surface et/ou d'ondes d'espace produits par le transducteur (20, 120) dans le substrat (10, 110).

9. Dispositif (1) selon l'une quelconque des revendications précédentes, **caractérisé en ce que** le dispositif (1) présente en outre un générateur pour produire un signal d'attaque situé dans une plage de fréquences supérieures à 100 kHz pour l'entraînement d'un transducteur (20, 120).

10. Système optique pour la surveillance de l'environnement doté d'un dispositif de surveillance optique comprenant une lentille et/ou une fenêtre de visualisation et dispositif selon l'une quelconque des revendications précédentes, dans lequel la lentille ou la fenêtre de visualisation est formée par le substrat.
